# EUROPEAN PATENT SPECIFICATION

(11) **EP 2 363 195 B1**
(45) Date of publication and mention of the grant of the patent: **28.08.2013**
(21) Application number: 11156777.2
(22) Date of filing: 03.03.2011
(51) Int. Cl.: B01D 53/94, B01J 37/00, B01J 37/02, B01J 37/08, B01J 23/00, B01J 23/656

(54) **Exhaust purification catalyst**
Abgasreinigungskatalysator
Catalyseur de purification d'échappement

(30) Priority: 05.03.2010 JP 2010049412
(43) Date of publication of application: 07.09.2011
(73) Proprietor: Honda Motor Co., Ltd., Tokyo 107-8556 (JP)
(72) Inventor: Ishizaki, Keita, Saitama 351-0193 (JP); Ohno, Hiroshi, Saitama 351-0193 (JP); Ohya, Naoki, Saitama 351-0193 (JP); Naka, Takahiro, Saitama 351-0193 (JP); Mitsuda, Naoki, Saitama 351-0193 (JP)
(74) Representative: Böhm, Brigitte

(56) References cited:
- EP-A1- 0 532 024
- EP-A1- 1 533 274
- EP-A1- 1 914 000
- WO-A1-96/40416
- WO-A1-2009/130869
- JP-A- 2009 279 579
- JP-A- 2010 042 396

## Description

This application is based on and claims the benefit of priority from Japanese Patent Application No. 2010-049412, filed on 5 March 2010.

### BACKGROUND OF THE INVENTION

### Field of the Invention

The present invention relates to an exhaust purification catalyst. More specifically, the present invention relates to an exhaust purification catalyst that purifies CO and HC contained in the exhaust of an internal combustion engine by oxidation.

### Related Art

Conventionally, an exhaust purification catalyst having oxidizing ability has been used in order to purify the exhaust emitted from internal combustion engines such as automotive engines. For example, an exhaust purification catalyst composed of a complex oxide containing two types of metallic elements has been proposed, in which the ion radius ratio of the two types of metallic elements is set within a predetermined range, and a complex oxide of a hexagonal crystalline structure is used (refer to Japanese Unexamined Patent Application Publication No. 2007-216099).

According to the exhaust purification catalyst of Japanese Unexamined Patent Application Publication No. 2007-216099, superior oxidizing ability is exhibited, whereby it is made possible to efficiently purify the exhaust emitted from an internal combustion engine. In particular, it is disclosed in Japanese Unexamined Patent Application Publication No. 2007-216099 that a complex oxide of hexagonal crystalline structure has higher oxidizing ability than a complex oxide of orthorhombic crystalline structure.

The European patent application EP 1 914 000 A1 describes an oxidation catalyst for purifying an exhaust gas which can provide an excellent catalyst activity with lower temperatures for particulates and high boiling point hydrocarbons in exhaust gas of an internal combustion engine. The oxidation catalyst for purifying an exhaust gas is composed of a composite metal oxide is represented by the general formula: Y₁₋ₓAgₓMnO₃, wherein 0.01 ≤ x ≤ 0.15.

The international patent application WO 2009/130869 A1 relates to an oxidation catalyst which oxidizes contents such as particulates and hydrocarbons included in an exhaust gas of an internal combustion to purify the gas and an oxidation catalyst device for exhaust gas purification.

The Japanese patent application JP 2010 042396 A discloses an oxidation catalyst device for purifying an exhaust gas which can oxidize and fire particulates in the exhaust gas under lower temperature and in a shorter time. The oxidation catalyst device for purifying the exhaust gas is provided with a porous filter substrate and a catalyst carried by the porous filter substrate. The catalyst is represented by the general formula: Y₁₋ₓAgₓMn_{1-y}Ti_{y}O₃.

The Japanese patent application JP 2009 279579 A discloses an oxidation catalyst capable of exhibiting excellent catalytic activity to particulates or high boiling point hydrocarbons in exhaust gas from an internal combustion engine at lower temperature.

The European patent application EP 0 532 024 A1 relates to a catalyst or catalytic reduction of nitrogen oxide using a hydrocarbon and/or an oxygen-containing organic compound as a reducing agent which comprises a perovskite type compound oxide.

### SUMMARY OF THE INVENTION

Incidentally, based on the further toughening of exhaust restriction of recent years, it has been desired to improve the purification rate of exhaust also during cold starting of internal combustion engines. In particular, it has been sought to lower the oxidation onset temperature of CO (carbon monoxide) and HC (hydrocarbons). Additionally, a catalyst has been sought having superior heat resistance so as to be able to exhibit stable oxidizing ability even in the case of extended use at high temperatures.

The present invention has been made taking the above issues into account, and has an object of providing an exhaust purification catalyst that can efficiently purify CO and HC contained in the exhaust of an internal combustion engine at low temperature by oxidation, and has superior heat resistance.

In order to achieve the above-mentioned object, the present invention provides an exhaust purification catalyst that purifies CO and HC contained in the exhaust of an internal combustion engine by oxidation, in which the catalyst includes a complex oxide having hexagonal crystals and orthorhombic crystals.

In the present invention, the exhaust purification catalyst is configured to include a complex oxide having hexagonal crystals and orthorhombic crystals.

Strain thereby occurs in a portion of the hexagonal crystalline structure and a portion of the orthorhombic crystalline structure inside of the complex oxide configuring the exhaust purification catalyst of the present invention. When strain occurs, the bonding force of the oxygen atoms weakens, a result of which the oxygen releasing ability of the complex oxide increases. As a result, the CO and HC oxidizing performance can be improved, whereby purification activity that excels at low temperatures is achieved.

In addition, since the exhaust purification catalyst of the present invention is configured by a complex oxide having hexagonal crystals and orthorhombic crystals, a portion of hexagonal crystalline structure and a portion of orthorhombic crystalline structure coexist. Therefore, superior heat resistance is possessed in that, even in a case of extended use at high temperatures, crystal growth is suppressed more than a crystal of a solitary crystalline structure.

The above-mentioned complex oxide is represented by the following general formula (1).

ABO₃ (1)

In the general formula (1), A is Y and La, B is Mn and Ti, and the sum total of the number of constituent elements of A and the number of constituent elements of B is 4.

In.the present invention, the exhaust purification catalyst is configured using a complex oxide satisfying the above formula (1).

Herein, the type of elements constituting A (hereinafter also referred to as A site) and B (hereinafter also referred to as B site) of the complex oxide and the number of elements greatly influence the crystalline structure of the complex oxide. More specifically, a complex oxide having hexagonal crystals and orthorhombic crystals is obtained by constituting the A site of the complex oxide by Y and La, and constituting the B site by Mn and Ti, as well as setting the sum total of the number of constituent elements of the A site and the number of constituent elements of the B site to 4. In addition, if the sum total of the number of constituent elements of A and the number of constituent elements of B is 2, a complex oxide composed of a solitary crystal that is a hexagonal crystal or an orthorhombic crystal will be yielded. Therefore, according to the present invention, an exhaust purification catalyst containing a complex oxide having hexagonal crystals and orthorhombic crystals is reliably obtained due to using a complex oxide satisfying the above formula (1), and thus the effects of the above-mentioned invention will be exhibited reliably.

The above-mentioned exhaust purification catalyst preferably further contains Zr.

In the present invention, the exhaust purification catalyst-is configured to contain Zr.

Herein, the Zr functioning as a binder excels in CO and HC oxidizing performance and heat resistance, compared to the typical Si binder or A1 binder. Therefore, according to the present invention, it is possible to further improve the CO and HC oxidizing performance as well as the heat resistance.

The above-mentioned exhaust purification catalyst further contains Pd, in which the content of the above-mentioned noble metal element is in the range of 0.01% by weight to 10% by weight relative to the content of the above-mentioned complex oxide.

In the present invention, the exhaust purification catalyst is configured to include a noble metal element, and the content of noble metal element is set to within the range of 0.01% by weight to 10% by weight relative to the content of complex oxide.

If the content of noble metal element is less than 0.01% by weight, the CO and HC oxidizing performance will not be able to be improved. In addition, if the content of the noble metal element exceeds 10% by weight, an improvement in the oxidizing performance commensurate with the added amount of noble metal element will not be obtained, and sintering of the noble metal element will become apparent. Therefore, according to the present invention, the noble metal element is contained within the above-mentioned range so that the CO and HC oxidizing performance can be further improved.

The above-mentioned exhaust purification catalyst is preferably prepared by calcining at a temperature in the range of 600°C to 1000°C.

In the present invention, the exhaust purification catalyst is prepared by calcining at a temperature of 600°C to 1000°C.

If the calcination temperature of the exhaust purification catalyst is less than 600°C, the generation of a hexagonal crystalline structure may be insufficient, and only an orthorhombic crystalline structure may be formed. In addition, if the calcination temperature exceeds 1000°C, the purification performance may decline due to the specific surface area of the exhaust purification catalyst decreasing, and thus the contact efficiency declining. Consequently, according to the present invention, hexagonal crystals and orthorhombic crystals can be made to coexist since the exhaust purification catalyst is prepared by setting the calcination temperature to within the range of 600°C to 1000°C, whereby the CO and HC oxidizing performance can be reliably improved, in addition to the heat resistance being able to be further improved. It should be noted that the calcination temperature in the present invention indicates the calcination temperature of main calcination.

According to the present invention, an exhaust purification catalyst can be provided that is able to efficiently purify CO and HC contained in the exhaust of an internal combustion engine at low temperatures by oxidation, and additionally has superior heat resistance.

### BRIEF DESCRIPTION OF THE DRAWINGS

FIG. 1 presents X-ray diffraction spectra of the exhaust purification catalysts of non-inventive Examples 1 to 3;
FIG. 2 presents X-ray diffraction spectra of the exhaust purification catalysts of Examples 4 and 5 and Comparative Examples 1 and 3; and
FIG. 3 is a schematic configuration diagram of the exhaust purification test apparatus.

### DETAILED DESCRIPTION OF THE INVENTION

An embodiment of the present invention will be explained in detail hereinafter.

An exhaust purification catalyst according to the embodiment of the present invention is disposed in the exhaust system of an internal combustion engine, and has a function of purifying CO and HC contained in the exhaust by oxidation. More specifically, the exhaust purification catalyst of the present embodiment is loaded on a support such as a DPF (diesel particulate filter) or a honeycomb structure disposed in the exhaust plumbing of an.internal combustion engine, and purifies CO and HC in the exhaust flowing inside the exhaust plumbing by oxidation.

The exhaust purification catalyst of the present embodiment is configured to include a complex oxide as a catalyst carrier, Zr as a binder, and a noble metal element as a catalytic metal.

A complex oxide having hexagonal crystals and orthorhombic crystals is used as the complex oxide. In the present embodiment, a complex oxide is formed in which the hexagonal crystalline structure and orthorhombic crystalline structure coexist.

In addition, the complex oxide used in the present embodiment has a structure represented by the following general formula (1).

ABO₃ (1)

In the above formula (1), A is Y and La. B is Mn and Ti. In addition, the sum total of the number of constituent elements A and the number of constituent elements B is 4. A complex oxide having hexagonal crystals and orthorhombic crystals is obtained by satisfying the above formula (1).

Zr functions as a binder of the exhaust purification' catalyst of the present embodiment. Zr is introduced into the exhaust purification catalyst by adding ZrO₂ sol, etc. along with moisture into the constituent materials of the complex oxide, and calcining this mixture.

As a noble metal element, Pd is used.
The content of the noble metal element is 0.01% by weight to 10% by weight relative to the content of complex oxide. If the content of noble metal element is less than 0.01% by weight, the CO and HC oxidizing performance will not be able to be improved. In addition, if the content of noble metal element exceeds 10% by weight, an improvement in the oxidizing performance commensurate with the added amount thereof will not be obtained, and sintering of the noble metal elements will become apparent.

The exhaust purification catalyst of the present embodiment is prepared according to the following procedure.

First, each material containing an element constituting an A site and B site of the complex oxide is mixed at predetermined mole ratios, then dry-milled, and primarily calcined under predetermined conditions. After the primary calcination, ZrO₂ sol as a binder, etc. are added along with moisture to the mixture that has been dry-milled again, to make a slurry. Next, the slurry is impregnated into a support such as a DPF or honeycomb structure, and then main calcination is carried out thereon under predetermined conditions. Furthermore, an exhaust purification catalyst that has been loaded onto the support is obtained by separately impregnating prepared slurries containing the noble metal element into the support after main calcination has been carried out thereon.

It should be noted that the calcination temperature of the main calcination is within the range of 600°C to 1000°C in the present embodiment. If the calcination temperature of main calcination is less than 600°C, the generation of a hexagonal crystalline structure may be insufficient, and only then orthorhombic crystalline structure may be formed. In addition, if the calcination temperature of the main calcination exceeds 1000°C, the purification performance may decline due to the specific surface area of the exhaust purification catalyst decreasing and thus the contact efficiency declining.

In addition, a commercially available product can be used as the support on which the exhaust purification catalyst of the present embodiment is loaded. For example, in addition to a DPF made from SiC, a honeycomb structure made from cordierite can be used.

The following effects are exerted according to the exhaust purification catalyst of the present embodiment having the above such configuration.

In the present embodiment, the exhaust purification catalyst is configured to include complex oxides having hexagonal crystals and orthorhombic crystals.

Strain thereby occurs in a portion of the hexagonal crystalline structure and a portion of the orthorhombic crystalline structure inside of the complex oxide configuring the exhaust purification catalyst of the present embodiment. When strain occurs, the bonding force of the oxygen atoms weakens, a result of which the oxygen releasing ability of the complex oxide increases. As a result, the CO and HC oxidizing performance can be improved, whereby purification activity that excels at low temperatures is achieved.

In addition, since the exhaust purification catalyst of the present embodiment is configured by complex oxides having hexagonal crystals and orthorhombic crystals, the portion of hexagonal crystalline structure and the portion of orthorhombic crystalline structure coexist. As a result, superior heat resistance is possessed in that, even in a case of extended use at high temperatures, crystal growth is suppressed more than a crystal of a solitary crystalline structure.

In addition, the exhaust purification catalyst of the present embodiment is configured using a complex oxide satisfying the above formula (1).

Herein, the type of elements configuring A (hereinafter also referred to as A site) and B (hereinafter also referred to as B site) of the complex oxide and the number of elements greatly influence the crystalline structure of the complex oxide. More specifically, a complex oxide having hexagonal crystals and orthorhombic crystals is obtained by constituting the A site of the complex oxide by Y and La, and constituting the B site by Mn and Ti, as well as setting the sum total of the number of constituent elements of the A site and the number of constituent elements of the B site to 4.

In addition, if the sum total of the number of constituent elements of A and the number of constituent elements of B is 2, a complex oxide composed of a solitary crystal that is a hexagonal.crystal or an orthorhombic crystal will be yielded.

Therefore, according to the present embodiment, an exhaust purification catalyst containing a complex oxide having hexagonal crystals and orthorhombic crystals is reliably obtained due to using a complex oxide satisfying the above formula (1), and thus the aforementioned effects are reliably exhibited.

In addition, the exhaust purification catalyst of the present embodiment is configured to include Zr.

Herein, the Zr functioning as a binder excels in CO and HC oxidizing performance and heat resistance, compared to the typical Si binder or A1 binder. Therefore, according to the present embodiment, it is possible to further improve the CO and HC oxidizing performance as well as the heat resistance.

Furthermore, in the present embodiment, the exhaust purification catalyst is configured to include Pd as a noble metal element, and the content of the noble metal element is within the range of 0.01% by weight to 10% by weight relative to the content of complex oxides.

If the content of noble metal element is less than 0.01% by weight, the CO and HC oxidizing performance will not be able to be improved. In addition, if the content of noble metal element exceeds 10% by weight, an improvement in the oxidizing performance commensurate with the added amount thereof will not be obtained, and sintering of the noble metal element will become apparent. Therefore, according to the present embodiment, the noble metal element is contained within the above-mentioned range so that the CO and HC oxidizing performance can be further improved.

In addition, the exhaust purification catalyst of the present embodiment is prepared by calcining at a temperature of 600°C to 1000°C.

If the calcination temperature of the exhaust purification catalyst is less than 600°C, the generation of a hexagonal crystalline structure may be insufficient, and only an orthorhombic crystalline structure may be formed. In addition, if the calcination temperature exceeds 1000°C, the purification performance may decline due to the specific surface area of the exhaust purification catalyst decreasing and thus the contact efficiency declining. Consequently, according to the present embodiment, hexagonal crystals and orthorhombic crystals can be made to coexist since the exhaust purification catalyst is prepared by setting the calcination temperature to within the range of 600°C to 1000°C, whereby the CO and HC oxidizing performance can be further improved.

It should be noted that the present invention is not to be limited to the above-mentioned embodiment, and modifications and improvements within a scope that can achieve the object of the present invention are included in the present invention.

### EXAMPLES

Although the present invention will be explained next in further detail based on Examples, the present invention is to be limited thereto.

### Non-inventive Example 1: Y_{0.8}Ag_{0.2}Mn₀.₈Ti_{0.2}O₃

A foam was.obtained by weighing yttrium nitrate, silver nitrate, manganese nitrate, titanium oxide, citric acid and water so as to make the mole ratio of 0.8:0.2:0.8:0.2:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. After calcination, the DPF was further calcined for 30 hours at 700°C in order to confirm the heat resistance thereof. A DPF with an 80 g/L loading of the exhaust purification catalyst was thereby obtained. This is set as Example 1.

### Non-inventive Example 2: Y_{0.9}Ag_{0.1}Mn_{0.9}Fe_{0.1}O₃

A foam was obtained by weighing yttrium nitrate, silver nitrate, manganese nitrate, iron nitrate, citric acid and water so as to make the mole ratio of 0.9:0.1:0.9:0.1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. After calcination, the DPF was further calcined for 30 hours at 700°C in order to confirm the heat resistance thereof. A DPF with an 80 g/L loading of the exhaust purification catalyst was thereby obtained. This is set as Example 2.

### Non-inventive Example 3: Y_{0.85}Ce_{0.05}Ag_{0.1}Mn_{0.9}Ti_{0.1}O₃

A foam was obtained by weighing yttrium nitrate, cerium nitrate, silver nitrate, manganese nitrate, titanium oxide, citric acid and water so as to make the mole ratio of 0.85:0.05:0.1:0.9:0.1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. After calcination, the DPF was further calcined for 30 hours at 700°C in order to confirm the heat resistance thereof. A DPF with an 80 g/L loading of the exhaust purification catalyst was thereby obtained. This is set as Example 3.

### Example 4: La_{0.5}Y_{0.5}Mn_{0.9}Ti_{0.1}O₃ (Pd=0.1% by weight)

A foam was obtained by weighing lanthanum nitrate, yttrium nitrate, manganese nitrate, titanium oxide, citric acid and water so as to make the mole ratio of 0.5:0.5:0.9:0.1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. Next, Pd was loaded by impregnating palladium nitrate into the DPF on which the complex oxide obtained by calcination had been loaded, so as to make the loading of Pd 0.1% by weight relative to the amount of complex oxide. Thereafter, the DPF was further calcined for 30 hours at 700°C in order to confirm the heat resistance thereof. A DPF with an 80 g/L loading of the exhaust purification catalyst was thereby obtained. This is set as Example 4.

### Example 5: La_{0.75}Y_{0.25}Mn_{0.9}Ti_{0.1}O₃ (Pd=0.1% by weight)

A foam was obtained by weighing lanthanum nitrate, yttrium nitrate, manganese nitrate, titanium oxide, citric acid and water so as to make the mole ratio of 0.75:0.25:0.9:0.1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. Next, Pd was loaded by impregnating palladium nitrate into the DPF on which the complex oxide obtained by calcination had been loaded, so as to make the loading of Pd 0.1% by weight relative to the amount of complex oxide. Thereafter, the DPF was further calcined for 30 hours at 700°C in order to confirm the heat resistance thereof. A DPF with an 80 g/L loading of the exhaust purification catalyst was thereby obtained. This is set as Example 5.

### Non-inventive Example 6: La_{0.75}Y_{0.25}Mn_{0.9}Ti._{0.1}O₃ (Pt=0.1% by weight)

A foam was obtained by weighing lanthanum nitrate, yttrium nitrate, manganese nitrate, titanium oxide, citric acid and water so as to make the mole ratio of 0.75:0.25:0.9:0.1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore'diameter: 11 µm; porosity: 42%; cell density: 300 cpsi; cell wall thickness: 254 µm), after which the DPF was calcined for 1 hour at 1000°C. Next, Pt was loaded by impregnating a solution of dinitrodiamine platinum nitrate into the DPF on which the complex oxide obtained by calcination had been loaded, so as to make the loading of Pt 0.1% by weight relative to the amount of complex oxide. Thereafter, the DPF was further calcined for 30 hours at 700°C in order to confirm the heat resistance thereof. A DPF with an 80 g/L loading of the exhaust purification catalyst was thereby obtained. This is set as Example 6.'

### Comparative Example 1: YMnO₃

A foam was obtained by weighing yttrium nitrate, manganese nitrate, citric acid and water so as to make the mole ratio of 1:1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. After calcination, the DPF was further calcined for 30 hours at 700°C in order to confirm the heat resistance thereof. A DPF with an 80 g/L loading of the exhaust purification catalyst was thereby obtained. This is set as Comparative Example 1.

### Comparative Example 2: YMnO₃ (Pd=0.1% by weight)

A foam was obtained by weighing yttrium nitrate, manganese nitrate, citric acid and water so as to make the mole ratio of 1:1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. Next, Pd was loaded by impregnating palladium nitrate into the DPF on which the complex oxide obtained by calcination had been loaded, so as to make the loading of Pd 0.1% by weight relative to the amount of complex oxide. Thereafter, the DPF was further calcined for 30 hours at 700°C in order to confirm the heat resistance thereof. A DPF with an 80 g/L loading of the exhaust purification catalyst was thereby obtained. This is set as Comparative Example 2. Comparative Example 3: LaMnO₃

A foam was obtained by weighing lanthanum nitrate, manganese nitrate, citric acid and water so as to make the mole ratio of 1:1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. After calcination, the DPF was further calcined for 30 hours at 700°C in order to confirm the heat resistance thereof. A DPF with an 80 g/L loading of the exhaust purification catalyst was thereby obtained. This is set as Comparative Example 3.

### Comparative Example 4: LaMnO₃ (Pd=0.1% by weight)

A foam was obtained by weighing lanthanum nitrate, manganese nitrate, citric acid and water so as to make the mole ratio of 1:1:6:17, placing all of these into a beaker, and heating to 100°C. The foam thus obtained was heated for 30 minutes at 150°C, further heated for 30 minutes at 200°C, and then dry milled. The fine powder obtained by dry milling was calcined for 1 hour at 350°C to obtain a primary calcined product, and then dry milled again. Thereafter, a slurry, which was obtained by mixing the fine powder thus obtained, ZrO₂ sol made by Nissan Chemical Industries, Ltd. (ZrO₂=40% by weight), and water so as to make a weight ratio of 10:2.5:50, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 1000°C. Next, Pd was loaded by impregnating palladium nitrate into the DPF on which the complex oxide obtained by calcination had been loaded, so as to make the loading of Pd 0.1% by weight relative to the amount of complex oxide. Thereafter, the DPF was further calcined for 30 hours at 700°C in order to confirm the heat resistance thereof. A DPF with an 80 g/L loading of the exhaust purification catalyst was thereby obtained. This is set as Comparative Example 4.

### Comparative Example 5: A1₂O₃ (Pd=0.1% by weight)

Palladium nitrate was impregnated into gamma alumina so as to make the content of Pd 0.1% by weight relative to gamma alumina, after which the gamma alumina was calcined for 1 hour at 600°C. The fine powder after calcination was dry milled for 15 minutes. A slurry, which was obtained by mixing the fine powder thus obtained by dry milling, alumina sol made by Nissan Chemical Industries, Ltd. (AlO₂O₃=20% by weight), and water so as to make a weight ratio of 9:5:20, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 600°C. After calcination, the DPF was further calcined for 30 hours at 700°C in order to confirm the heat resistance thereof. A DPF with an 80 g/L loading of the exhaust purification catalyst was thereby obtained. This is set as Comparative Example 5.

### Comparative.Example 6: Al₂O₃ (pt=0.1% by weight)

A solution of dinitrodiamine platinum nitrate was impregnated into gamma alumina so as to make the content of Pt 0.1% by weight relative to gamma alumina, after which the gamma alumina was calcined for 1 hour at 600°C. The fine powder after calcination was dry milled for 15 minutes. A slurry, which was obtained by mixing the fine powder thus obtained by dry milling, alumina sol made by Nissan Chemical Industries, Ltd. (AlO₂O₃=20% by weight), and water so as to make a weight ratio of 9:5:20, was impregnated into a SiC-DPF made by Ibiden Co., Ltd. (pore diameter: 11 µm; porosity: 42%; cell density: 300 cpsi; cell wall thickness: 254 µm), after which the DPF was calcined for 1 hour at 600°C. After calcination, the DPF was further calcined for 30 hours at 700°C in order to confirm the heat resistance thereof. A DPF with an 80 g/L loading of the exhaust purification catalyst was thereby obtained. This is set as Comparative Example 6.

### Crystalline Structure

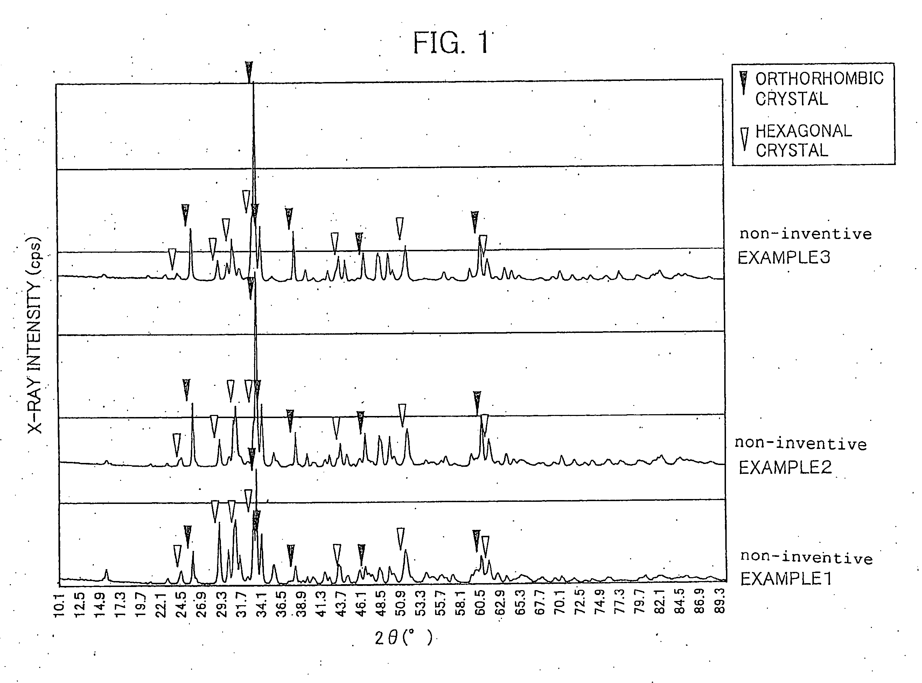

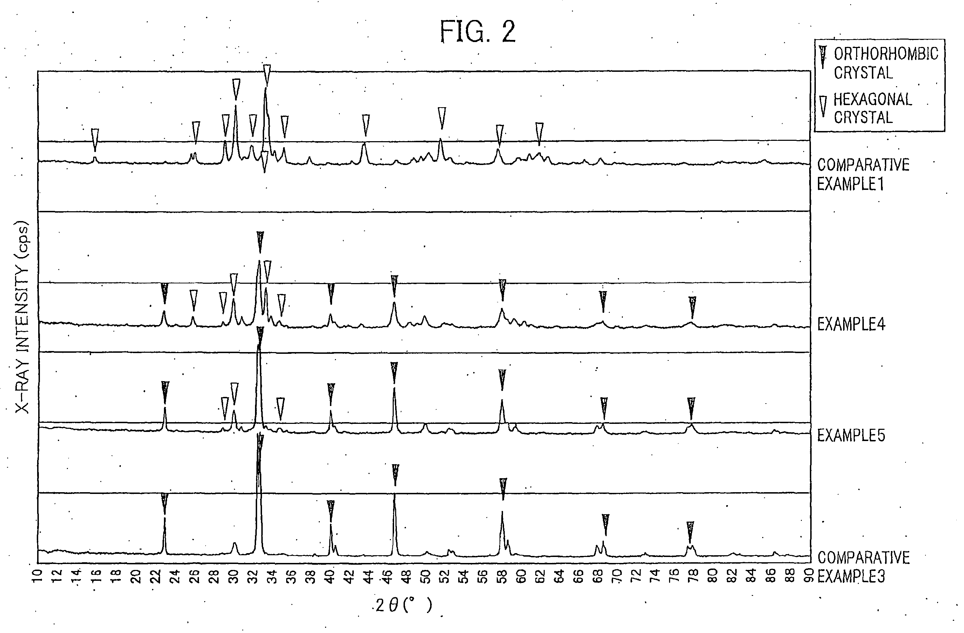

For each of the exhaust purification catalysts obtained in Examples 1 to 5 and Comparative Examples 1 to 6, X-ray diffraction measurements were performed according to the following measurement conditions to conduct crystal structure analysis. More specifically, it was determined whether or not hexagonal crystals and orthorhombic crystals had been formed based on the X-ray diffraction spectrum of each of the exhaust purification catalysts obtained by measurement and the characteristic X-ray peak positions of hexagonal crystals and orthorhombic crystals, respectively. The results are shown in FIGS. 1 and 2.

### Measurement Conditions

Instrument: RINT 2000 made by Rigaku Corporation
Characteristic X-rays: Cu-Kα
Measurement range (2θ): 10° to 90°

In FIGS. 1 and 2, the black triangles are peak positions of orthorhombic crystalline structure, and the white triangles indicate peak positions of hexagonal crystalline structure. As shown in FIGS. 1 and 2, almost all of the peaks in the X-ray diffraction spectra for Examples 1 to 5 belong to peaks of orthorhombic crystalline structure and peaks of hexagonal crystalline structure, thereby confirming that the Examples possess hexagonal crystals and orthorhombic crystals.

In contrast, only the peaks of hexagonal crystalline structure are observed in the X-ray diffraction spectrum of Comparative Example 1, thereby confirming that Comparative Example 1 contains hexagonal solitary crystals. It should be noted that the results were similar for Comparative Example 2, although not illustrated.

In addition, only the peaks of orthorhombic crystalline structure were observed in the X-ray diffraction spectrum of Comparative Example 3, thereby confirming the Comparative Example 3 contains orthorhombic solitary crystals. It should be noted that the results were similar for Comparative Example 4, although not illustrated.

Furthermore, Comparative Examples 5 and 6 were confirmed not have either hexagonal crystals or orthorhombic crystals.

### CO and HC Purification Performance

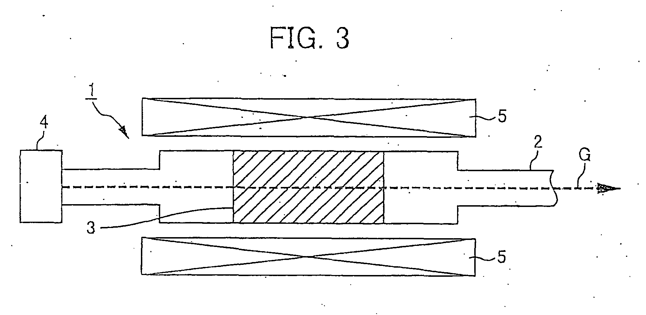

First, the exhaust purification test apparatus 1 shown in FIG. 3 was built. This exhaust purification test apparatus 1 includes a compressed gas cylinder 4 filled with model gas of the composition shown below, an exhaust pipe 2 through which the model gas supplied from the compressed gas cylinder 4 flows, an exhaust purification catalyst-loaded DPF 3 disposed inside the exhaust pipe 2, and a pair of fired heaters 5 and 5 for heating the DPF 3. In addition, the exhaust purification test apparatus 1 includes an analytical instrument (a MEXA-7500D manufactured by Horiba, Ltd.), which is not illustrated, for measuring the content of CO and HC in the exhaust having passed through the DPF 3.

It should be noted that the DPFs obtained in each of the Examples and Comparative Examples were used as the exhaust purification catalyst-loaded DPF 3.

### Model Gas Composition

O₂:6%
CO_{2:}10%
HC (C₃H₆) : 500ppmC (167ppm)
CO:1000ppm
NO:200ppm
H₂O:70%
N₂: Balance gas

After building the exhaust purification test apparatus 1, the above-mentioned model gas was allowed to flow inside of the exhaust pipe 2 at a flow rate of 15.0 L/min, using the compressed gas cylinder 4. The contents of CO and HC in the gas having passed through the DPF 3 were measured using the above-mentioned analytical instrument. In addition, the temperature (T50) at which 50% of the CO and HC were respectively purified was measured from comparative results between the measurement results and the contents of CO and HC in the model gas, and these T50 values were set as an index of the CO and HC purification performance.

It should be noted that the volume of the DPF 3 was 57 cc and that measurements for the temperature of the DPF 3 were conducted at a location 10 mm downstream of the DPF 3. The results are shown in Table 1.

**Table.1**

| | complex oxide | noble metal (% by weight) | hexagonal crystal | orthorhombic crystal | C0-T50 (°C) | HC-T50 (°C) |
|---|---|---|---|---|---|---|
| Non-inventive Example 1 | Y_{0.8}Ag_{0.2}Mn_{0.8}Ti_{0.2}O₃ | (0) | existence | existence | 245 | 323 |
| Non-inventive Example 2 | Y_{0.9}Ag_{0.1}Mn_{0.9}Fe_{0.1}O₃ | (0) | existence | existence | 243 | 320 |
| Non-inventive Example 3 | Y₀.₈₆Ce_{0.06}Ag_{0.1}Mn_{0. 9}Ti_{0.1}O₃. | (0) | existence | existence | 239 | 315 |
| Example 4 | La_{0.6}Mn_{0.9}Ti_{0.1}O₃ | Pd (0. 1) | existence | existence | 206 | 237 |
| Example 5 | La_{0.76}Y_{0.26}Mn_{0.9}Ti_{0.1}O₃ | Pd (0. 1) | existence | existence | 203 | 229 |
| Non-inventive Example 6 | La_{0.76}Y_{0.26}Mn_{0.9}Ti_{0.1}O₃ | Pt (0. 1) | existence | existence | 215 | 240 |
| Comparative Example 1 | YMnO₃ | (0) | existence | nothing | 426 | 426 |
| Comparative Example 2 | YmnoO₃ | Pd(0. 1) | existence | nothing | 218 | 258 |
| Comparative Example 3 | LaMnO₃ | (0) | nothing | existence | >600 | >600 |
| Comparative Example 4 | LaMnO₃ | Pd (0. 1) | nothing | existence | 222 | 263 |
| Comparative Example 5 | Al₂O3 | Pd (0. 1) | nothing | nothing | 221 | 270 |
| Comparative Example 6 | Al₂O₃ | Pt (0. 1) | nothing | nothing | 219 | 277 |

From comparing non-inventive Examples 1 to 3, which do not contain noble metal, with Comparative Examples 1 and 3, which also do not contain noble metal, it was found that Examples 1 to 3 had both lower CO-T50 and HC-T50 than Comparative Examples 1 and 3. From this result, it has been confirmed that the DPFs containing complex oxides having hexagonal crystals and orthorhombic crystals are superior in CO and HC purification activity at low temperatures to those of only hexagonal crystals or only orthorhombic crystals.

In addition, from comparing Examples 4 to 6, which contain noble metal, with Comparative Examples 2 and 4 to 6, which also contain noble metal, it was found that Examples 4 to 6 had both lower CO-T50 and HC-T50 than Comparative Examples 2 and 4 to 6. From this result, it has been confirmed that the DPFs containing.complex oxides having hexagonal crystals and orthorhombic crystals are superior in CO and HC purification activity at low temperatures to those of only hexagonal crystals, those of only orthorhombic crystals, and those not having hexagonal crystals or orthorhombic crystals.

In addition, it was found that all of the exhaust purification catalyst of Examples 1 to 6 had both low CO-T50 and HC-T50, irrespective of having calcination for 30 hours at 700°C been further carried out thereon after the main calcination. From this result, it has been confirmed that all of the exhaust purification catalysts of Examples 1 to 6 have adequate heat resistance.

The present invention provides an exhaust purification catalyst that is able to efficiently purify CO and HC contained in the exhaust of an internal combustion engine at low temperatures by oxidation, and additionally has superior heat resistance. The exhaust purification catalyst contains a complex oxide having both hexagonal crystals and orthorhombic crystals. In addition, the exhaust purification catalyst contains a complex oxide represented by the general formula ABO₃ having hexagonal crystals and orthorhombic crystals. In the general formula, A is Y and La, B is Mn and Ti, and the sum total of the number of constituent elements of A and the number of constituent elements of B is 4.

## Claims

1. An exhaust purification catalyst that purifies CO and HC contained in exhaust of an internal combustion engine by oxidation, comprising:
a complex oxide having a hexagonal crystal and an orthorhombic crystal; and
Pd **characterized in that** the content of the Pd is in the range of 0.01 % by weight to 10% by weight relative to the content of the complex oxide,
wherein the complex oxide is ABO₃, wherein A is La and Y and wherein B is Mn and Ti.

2. The exhaust purification catalyst according to claim 1, **characterized in that** the exhaust purification catalyst further comprises Zr.

## Patentansprüche

1. Abgas aufreinigender Katalysator, welcher CO und HC durch Oxidation aufreinigt, die im Abgas eines internen Verbrennungsmotors enthalten sind, umfassend:
ein Komplexoxid, welches einen hexagonalen Kristall und einen orthorhombischen Kristall aufweist; und Pd, **dadurch gekennzeichnet, dass** der Gehalt an Pd im Bereich von 0,01 Gewichts-% bis 10 Gewichts-%, relativ zu dem Gehalt des Komplexoxids, liegt,
wobei das Komplexoxid ABO₃ ist, wobei A La und Y ist, und
wobei B Mn und Ti ist.

2. Abgas aufreinigender Katalysator nach Anspruch 1, **dadurch gekennzeichnet, dass** der Abgas aufreinigende Katalysator weiter Zr umfasst.

## Revendications

1. Catalyseur de purification d'échappement qui purifie le CO et les HC contenus dans l'échappement d'un moteur à combustion interne par oxydation, comprenant:
un oxyde complexe comprenant un cristal hexagonal et un cristal orthorhombique; et du Pd, **caractérisé en ce que** la teneur en Pd se situe dans la gamme de 0, 01 % en poids à 10 % en poids par rapport à la teneur en oxyde complexe,
dans lequel l'oxyde complexe est ABO_{3,} où A est La et Y, et B est Mn et Ti.

2. Catalyseur de purification d'échappement selon la revendication 1, **caractérisé en ce que** le catalyseur de purification d'échappement contient en outre du Zr.
